# EUROPÄISCHE PATENTSCHRIFT

(11) **EP 1 985 466 B1**
(45) Veröffentlichungstag und Bekanntmachung des Hinweises auf die Patenterteilung: **17.02.2010**
(21) Anmeldenummer: 08007776.1
(22) Anmeldetag: 22.04.2008
(51) Int. Cl.: B60B 1/00, B60B 5/02, B60B 21/08, B29C 70/34, B29C 70/44

(54) **Felge und Verfahren zur Herstellung einer Felge**
Wheel rim and method for manufacturing a wheel rim
Jante et procédé de fabrication d'une jante

(30) Priorität: 24.04.2007 DE 102007019587
(43) Veröffentlichungstag der Anmeldung: 29.10.2008
(73) Patentinhaber: DT Swiss AG, 2500 Biel (CH)
(72) Erfinder: Reuteler, Andreas, 2502 Biel (CH)
(74) Vertreter: Schütte, Hartmut

(56) Entgegenhaltungen:
- EP-A- 1 231 077
- EP-A- 1 506 882
- WO-A-97/18098
- DE-A1-102006 010 445
- US-B1- 6 347 839

## Beschreibung

Die Erfindung betrifft eine mit Felgenhörnern versehene Felge und ein Verfahren zur Herstellung einer solchen Felge, insbesondere aus einem Faserverbundwerkstoff.

Eine solche Felge ist aus der gattungsgemäßen WO 97/18098 A bekannt.

Insbesondere im Bereich der Amateure weisen Felgen für Fahrräder oftmals Felgenhörner auf, zwischen denen ein Reifen an der Felge befestigbar ist. Im Bereich des professionellen Radsports und auch im Bereich der Amateure spielt das Gewicht und die Belastbarkeit der Komponenten eines Fahrrads eine entscheidende Rolle, da anspruchsvolle Benutzer Wert auf hochwertige und leichte Komponenten legen.

Im Stand der Technik sind Felgen aus faserverstärktem Kunststoff bekannt geworden, mit denen das Gewicht der Felgen verringert werden kann. Gleichzeitig erreichen solche Felgen bei geringerem Gesamtgewicht eine vergleichbare Stabilität wie Metallfelgen. Ein Nachteil von Felgen aus faserverstärkten Materialien ist allerdings die aufwändige Herstellung, da viele Herstellungsschritte meist von Hand durchgeführt werden müssen, was zu höheren Kosten führt.

Oftmals werden die Felgen durch das Aufbringen von mit Harz getränkten Fasergewebematten in eine Form hergestellt, wobei nach dem Aushärten wenigstens eine Nachbearbeitung im Bereich der Felgenhörner erforderlich ist, um die Felgenhörner in die gewünschte Form zu bringen.

Beispielsweise ist aus der EP 1 231 077 B1 ein Verfahren zur Herstellung einer Felge für ein Fahrrad und eine entsprechende Vorrichtung zur Herstellung einer Felge bekannt geworden, wonach zur Herstellung einer mit Felgenhörnern versehenen Hohlkammerfelge nacheinander mehrere Lagen eines strukturellen Fasergewebes, welches eine Kunststoffmatrix enthält, einzelnen auf den inneren Teil einer Form aufgebracht werden. Die aufgebrachte vorgegebene Anzahl von Lagen bildet die innere Wand, die äußere Wand, die zwei seitlichen Wände und die Felgenhörner der Felge. Anschließend wird ein aufblasbarer Beutel auf die Lagen aufgebracht. Auf dem Beutel wird eine vorbestimmte Anzahl von Lagen umgelegt. Auf die umgefalteten ersten Lagen wird ein Kern aufgebracht, über dem die restlichen Lagen gefaltet werden. Nach dem Verschließen der Form wird die Form auf eine erhöhte Temperatur gebracht, um ein Netzwerk der Kunststoffmatrix zu erzeugen. Die Felge wird der Form entnommen und die überstehenden Felgenhörner werden gekürzt und in einem nachfolgenden mechanischen und spanenden Bearbeitungsschritt in die gewünschte Form gebracht.

Nachteilig bei dem bekannten Verfahren ist der hohe Arbeitsaufwand bei der Herstellung der Felge.

Es ist deshalb die Aufgabe der vorliegenden Erfindung, eine Felge und ein Verfahren zur Herstellung einer Felge zur Verfügung zu stellen, womit eine leichte und dennoch stabile Felge bereit gestellt wird, bei welcher ein geringerer Herstellungsaufwand vorliegt.

Diese Aufgabe wird gelöst durch die Felge mit den Merkmalen des Anspruchs 1 und durch ein Verfahren zur Herstellung einer Felge mit den Merkmalen des Anspruchs 10. Bevorzugte Weiterbildungen und Ausgestaltungen der Erfindung sind Gegenstand der Unteransprüche.

Weitere Vorteile und Merkmale der vorliegenden Erfindung ergeben sich aus der Beschreibung der Ausführungsbeispiele.

Die erfindungsgemäße Felge ist insbesondere für Fahrräder und dergleichen vorgesehen und umfasst wenigstens einen Felgenkörper, der einen Felgenboden und seitliche mit Felgenhörnern versehene Felgenflanken aufweist. Wenigstens die Felgenhörner bestehen wenigstens teilweise aus einem Faserverbundmaterial mit wenigstens einer Faserlage, die in eine Kunststoffmatrix eingebettet ist. Die Felgenhörner weisen nach innen überstehende Ausbauchungen aus gestauchten Faserlagen auf, zwischen denen ein Reifen an dem Felgenkörper befestigt werden kann.

Die Erfindung hat viele Vorteile. Durch die gestauchten Faserlagen im Bereich der nach innen ragenden Ausbauchungen der Felgenhörner wird eine hohe Stabilität und Festigkeit der erfindungsgemäßen Felge erzielt. Gleichzeitig wird durch die Verpressung im Bereich der Felgenhörner eine hohe Oberflächenqualität und eine hohe Reproduzierbarkeit der Oberflächenform erzielt.

Ein erheblicher Vorteil ist, dass eine spanende Nachbearbeitung der erfindungsgemäßen Felge nach dem Hernehmen aus der Herstellform nicht nötig ist. Allenfalls wird ein Grat entfernt, der sich beispielsweise an der Trennfuge der Formteile der Herstellform ergibt. Dazu ist aber eine spanende Bearbeitung nicht erforderlich, sondern allenfalls ein Entgraten. Es sind weniger Arbeitsschritte erforderlich, womit der Herstellungsaufwand sinkt.

Eine erfindungsgemäße Felge ist insbesondere für den Einsatz von Drahtreifen oder auch für den Einsatz von Wulstreifen geeignet, bei denen der Wulst des Reifens an den Ausbauchungen der Felgenhörner aufgenommen wird. Die beiden nach innen ragenden Ausbauchungen bilden einen Hinterschnitt an dem Felgenhorn zur sicheren Aufnahme des Reifens.

In einer bevorzugten Weiterbildung der Erfindung weist der Felgenkörper ein Felgenbett auf, welches über die Felgenflanken mit dem Felgenboden verbunden ist, sodass sich insgesamt eine Hohlkammerfelge ergibt. Das Felgenbett ist dabei radial weiter außen vorgesehen als der Felgenboden. In Weiterbildungen dieser Ausgestaltung ist es möglich, zusätzlich noch wenigstens einen Quersteg zwischen Felgenbett und Felgenboden vorzusehen, um die seitliche Stabilität zu erhöhen.

Vorzugsweise besteht der Felgenkörper insgesamt im Wesentlichen aus wenigstens einem Faserverbundmaterial. Möglich ist auch der kombinierte Einsatz von zwei unterschiedlichen Faserverbundmaterialien, bei denen gleiche oder unterschiedliche Verstärkungsfasern und gleiche oder unterschiedliche Matrixmaterialien eingesetzt werden.

In einer besonders bevorzugten Weiterbildung der Erfindung besteht der Felgenkörper aus wenigstens zwei miteinander verbundenen Felgenteilen. Vorzugsweise sind die beiden Felgenteile wenigstens im Wesentlichen symmetrisch zueinander ausgebildet.

Insbesondere sind die beiden Felgenteile im Wesentlichen identisch ausgebildet und vorzugsweise in gleichen Herstellformen hergestellt. Eine solche Ausgestaltung bietet erhebliche Vorteile, da zur Herstellung der einzelnen Teile die gleiche Form verwendet werden kann. Genügt ein hergestelltes Teil den Qualitätsanforderungen nicht, so wird nur ein Teil und nicht die gesamte Felge unbrauchbar, sodass die Ausschussrate sinkt.

Vorzugsweise weisen die beiden Felgenteile jeweils eine Felgenflanke mit einem Felgenhorn auf und bilden einen Teil des Felgenbodens und insbesondere auch des Felgenbetts bei der Herstellung von Hohlkammerfelgen.

Vorzugsweise werden zur Herstellung der Felge genau zwei Felgenteile axial miteinander verbunden.

Besonders bevorzugt besteht die Felge aus zwei Felgenhälften, die einzeln hergestellt und anschließend miteinander verbunden werden.

Zur Verbindung und Fixierung der beiden Felgenteile wird vorzugsweise ein Streifen aus Faserverbundmaterial auf die radial gesehene innere Wandung des Felgenbodens aufgebracht. Alternativ oder ergänzend dazu wird vorzugsweise wenigstens ein Streifen aus Faserverbundmaterial auf die radial nach außen zeigende Wandung des Felgenbodens oder des Felgenbettes aufgebracht, um die beiden axialen Felgenteile sicher miteinander zu verbinden.

In allen Ausgestaltungen wird der Felgenkörper wenigstens teilweise und vorzugsweise insgesamt aus Prepregs hergestellt, die in ein Verbundmaterial eingebettete Faserlagen aufweisen. Vorzugsweise bestehen die Faserlagen wenigstens teilweise aus einem Fasergewebe, da ein Gewebe eine hohe Stabilität aufweist.

In allen Ausgestaltungen ist es bevorzugt, dass wenigstens einige Faserlagen im Bereich der Felgenhörner enden. Werden beispielsweise Streifen aus Faserverbundmaterial zur Herstellung eingesetzt, so werden die Streifen vorzugsweise derart in die Herstellform eingeführt, dass wenigstens ein seitliches Ende bzw. eine seitliche Kante im Bereich der Felgenhörner vorgesehen ist. Eine solche Anordnung ermöglicht eine einfache und präzise Ausrichtung der Streifen in der Herstellform und ermöglicht weiterhin eine präzise Stauchung und Verpressung der Faserlagen im Bereich der Felgenhörner.

In einer anderen Ausgestaltung ist es bevorzugt, dass wenigstens ein Felgenhorn wenigstens teilweise aus wenigstens einem Gewebeschlauch besteht, der vor oder nach dem Einlegen in die Form mit einem Verbundmaterial wie beispielsweise einem Harz getränkt wird. Im Bereich des Felgenhorns werden die Lagen des Gewebeschlauchs aufeinander gelegt und miteinander verpresst.

In Weiterbildungen der Erfindung ist im Bereich der Felgenflanken und insbesondere im Bereich der Felgenhörner eine z.B. Keramikteilchen umfassende Schicht vorgesehen, um wenigstens einen Teil und insbesondere die gesamten Bremsflächen mit Keramikteilchen zu versehen, um die Bremswirkung zu verstärken.

In einer weiteren Ausgestaltung ist wenigstens eine Speichenlochverstärkungslage vorgesehen, die den Felgenboden im Bereich der Speichenlöcher verstärkt. Bei einer zweiteiligen Felge ist vorzugsweise jeweils im Bereich des Felgenbodens eine entsprechende schmalere Verstärkungslage vorgesehen.

Zusätzlich zu einer speziellen Bremsschicht oder auch anstatt einer Bremsschicht kann eine Verschleißindikatoranzeige vorgesehen sein, die insbesondere als eine Verschleißindikatorlage an den Felgenflanken ausgebildet ist. Dazu können in periodischen Abständen über den Umfang verteilt Verschleißindikatoren vorgesehen sein, die normalerweise von einer Deckschicht bedeckt sind, aber die bei zunehmendem Verschleiß sichtbar werden und so einen drohenden Stabilitätsverlust der Felge anzeigen. Möglich ist es auch, wenigstens einen Verschleißindikator in die Felgenflanken zu integrieren.

Die Erfindung ist weiterhin auf ein Verfahren zur Herstellung einer Felge, insbesondere für Fahrräder, ausgerichtet, mit welchem eine Felge mit einem Felgenkörper herstellbar ist, wobei der Felgenkörper einen Felgenboden und seitliche mit Felgenhörnern versehene Felgenflanken aufweist. Dabei ist die Herstellung derart, dass wenigstens die Felgenhörner wenigstens teilweise aus einem Faserverbundmaterial aus wenigstens einer Faserlage bestehen. Erfindungsgemäß werden die Faserlagen im Bereich der Felgenhörner gestaucht, um nach innen überstehende Ausbauchungen zu bilden, zwischen denen ein Reifen an dem Felgenkörper aufnehmbar ist.

Auch das erfindungsgemäße Verfahren bietet viele Vorteile. Durch die Stauchung der Faserlagen im Bereich der Felgenhörner wird eine Nachbearbeitung eingespart. Der auftretende Druck sorgt für eine hohe Oberflächenqualität. Durch das Verpressen werden die Faserlagen im Bereich der Felgenhörner gestaucht und es wird die von der Grundform vorgegebene Form eingenommen. Eine hohe Oberflächenqualität wird erzielt.

In einer Weiterbildung des erfindungsgemäßen Verfahrens zur Herstellung einer Felge umfasst der fertige Felgenkörper ein Felgenbett, welches über die Felgenflanken mit dem Felgenboden verbunden ist, sodass eine Hohlkammerfelge hergestellt wird.

In Weiterbildungen wird zunächst ein Laminatband in eine Grundform eingebracht, welches wenigstens einen Streifen aus wenigstens einer Faserlage umfasst, um wenigstens einem Teil des Felgenbodens, sowie eine Felgenflanke und ein Felgenhorn zu bilden.

Anschließend wird ein Kern oder aufblasbarer Schlauch auf das Laminatband in der Grundform aufgelegt. Alternativ ist es möglich, den Kern außerhalb der Grundform mit dem Laminatband z.B. zu umwickeln. Vorzugsweise wird aber zunächst das Laminatband in die Grundform eingeführt, da dadurch eine präzise Anordnung des Laminatbandes in der Grundform möglich ist. Anschließend wird der Kern oder aufblasbare Schlauch auf das Laminatband aufgebracht.

Zum Verschließen der Grundform wird ein Außenring aufgebracht, der beim Schließen das Material in der Region wenigstens der oberen Felgenflanken und insbesondere der Felgenhörner staucht und verpresst und somit eine genaue Formgebung der Felgenhörner erlaubt.

Im Anschluss daran wird die Grundform bzw. das Werkzeug aufgeheizt und für eine vorbestimmte Zeitdauer bei vorbestimmten Temperaturbedingungen temperiert. Im Anschluss daran erfolgt die Entnahme der Felge, die aufgrund der Verpressung und der Stauchung der Faserlagen im Bereich der Felgenhörner nicht spanend bearbeitet werden muss, da eine hohe Oberflächenqualität und die gewünschte Form erzielt wird. Gegebenenfalls überstehende Grate können einfach entfernt werden.

Zur Herstellung des Laminatbandes werden insbesondere mehrere Streifen des Faserlagen aufweisenden Faserverbundmaterials auf einer separaten Unterlage definiert übereinander gelegt, um das Laminatband zu bilden. Im Anschluss daran wird das Laminatband vorzugsweise zu einem V-förmigen Laminatband umgeformt, um das Einlegen in die Grundform zu erleichtern. Beim Einlegen des V-förmigen Laminatbandes entlang des Umfangs des inneren Teils einer Grundform eines Werkzeugs wird das Laminatband genau an den entsprechenden Kanten ausgerichtet. Durch die Ausbildung des Laminatbands aus genau definierten Streifen mit genau definierter Länge und Breite wird eine präzise Fertigung mit einer hohen Reproduzierbarkeit ermöglicht.

Zur Herstellung kann zusätzlich auch noch ein weiteres Laminatband verwendet werden, welches durch Auflegen wenigstens einer zweiten Anzahl von Streifen eines Faserlagen umfassenden Materials auf die separate Unterlage gebildet wird. Dabei kann die zweite Anzahl von Streifen aus Faserlagen eine zweite Form aufweisen, die von der Form der Streifen für das erste Laminatband abweicht. Es ist auch möglich, dass einzelne Streifen des ersten Laminatbandes und des weiteren Laminatbandes jeweils voneinander unterschiedliche Formen aufweisen, sodass auch das zuerst eingelegte Laminatband zum Beispiel aus Streifen unterschiedlicher Breite und/oder Form besteht. Es ist möglich, dass jedes Laminatband nur aus jeweils einem Streifen bzw. einer Faserlage besteht.

Auf das in die Grundform eingelegte erste Laminatband kann ein aufblasbarer Schlauch aufgebracht werden, der aufgeblasen wird, um die Lagen des Laminatbandes in die gewünschte Form zu bringen. Nach der Herstellung kann der aufblasbare Schlauch wieder entfernt werden. Z.B. kann der aufblasbare Schlauch durch das Ventilloch herausgezogen werden.

Es kann auch ein Kern aufgebracht werden, der beispielsweise aus einem eutektischen Metall bestehen kann. Dadurch wird es ermöglicht, dass das beim Einlegen in die Form feste Metall später bei der Temperierung der Herstellform zum Aushärten und Vernetzen des Faserverbundmaterials in der Grundform schmilzt und im Anschluss daran beispielsweise über das Ventilloch der Felge aus dem Inneren der Felge herausgeführt werden kann, um es einer Wiederverwendung zuzuführen.

In anderen Ausgestaltungen kann der Kern aus einem Fluid bestehen und wiederum beispielsweise von einem Schlauch umgeben sein. Das Fluid kann beispielsweise Wasser oder Öl sein und es kann ein Druckausgleichsventil mit dem Kern verbunden sein, um den Druckanstieg beim Aufheizen auszugleichen.

In anderen Ausgestaltungen ist auch der Einsatz eines Kerns aus aufgeschäumten Kunststoff oder dergleichen möglich, der durch Lösungsmittel ausgewaschen wird oder in der Form verbleibt.

In einer Weiterbildung des Verfahrens werden die Faserlagen im Bereich der Felgenhörner in der Grundform durch wenigstens einen radial innenliegenden Steg des Außenrings gestaucht und umgeformt, um so die abschließende Gestalt der Felgenhörner zu erhalten. Eine solche Ausgestaltung bietet besondere Vorteile, da gleichzeitig mit dem Schließen des Außenrings die Faserlagen im Bereich der Felgenhörner gestaucht werden. Die festen und unverformbaren Stege führen zu einer genau definierten Formgebung der Felgenhörner.

In besonders bevorzugten Ausgestaltungen besteht die Grundform aus zwei Hälften, welche insbesondere vor dem Einbringen des ersten bzw. einzigen Laminatbandes miteinander verbunden werden. Dazu ist es möglich, dass die Formteile der Grundform zunächst miteinander verbunden werden und anschließend auf die formgebende Oberfläche ein Trennmittel aufgetragen wird, um ein Anhaften des Faserverbundmaterials an der Grundform zu vermeiden.

In einer bevorzugten Weiterbildung werden zwei Felgenteile hergestellt, die jeweils eine Felgenflanke mit einem Felgenhorn und einen Teil des Felgenbodens bilden. In bevorzugten Ausgestaltungen werden zwei identische Felgenteile hergestellt, die nach der Herstellung der beiden Felgenteile axial miteinander verbunden werden. Dazu kann beispielsweise auf die Felgenböden und/oder die Felgenflanken der aneinander gelegten Felgenteile ein zusätzlicher Streifen aus dem Faserverbundmaterial aufgelegt werden, um die beiden Felgenteile miteinander zu verbinden. Im Bereich des Felgenbodens kann die Verbindungslage auch zur Verstärkung des Felgenbodens dienen. Auch andere Verbindungsarten sind möglich.

Eine weitere Verbindungslage kann auf das Felgenbett aufgebracht werden, um die beiden Felgenteile miteinander zu verbinden.

In bevorzugten Weiterbildungen wird vor dem Aufbringen des Außenringes das radial überstehende Material entfernt, um eine optimale Stauchung und Verpressung zu ermöglichen.

Vorzugsweise wird an einem radial äußeren Bereich der formgebenden Oberfläche das Werkzeug mit einer Keramikteilchen umfassenden Schicht versehen, um wenigstens einen Teil der als Bremsflächen dienenden Felgenflanken mit einer Bremsschicht aus Keramikteilchen zu versehen.

In anderen Ausgestaltungen wird ein Keramikteilchen umfassender Streifen an passender Stelle auf das Laminatband aufgebracht, um den Bremsflächenbereich der Felgenflanken zu verstärken.

Ebenso ist es möglich, dass im Bereich des Felgenbodens eine Speichenlochverstärkungslage eingelegt wird.

Im weiteren bevorzugten Ausgestaltung wird eine Verschleißindikatorlage an den Felgenflanken eingesetzt, um frühzeitig den drohenden Verschleiß der Felge anzuzeigen.

In allen Ausgestaltungen kann das Matrixmaterial wenigstens teilweise aus einem duroplastischen Matrixmaterial bestehen. Möglich ist auch der Einsatz eines thermoplastischen Matrixmaterials.

Weitere Vorteile und Merkmale ergeben sich aus den Ausführungsbeispielen, die nun mit Bezug auf die beiliegenden Figuren erläutert werden.

In den Figuren zeigen:
- Fig. 1: eine erfindungsgemäße Felge im Schnitt;
- Fig. 2: eine Hälfte einer weiteren erfindungsgemäßen Felge im Schnitt;
- Fig. 3: eine schematische Darstellung der Faserlagen zur Herstellung der erfindungsgemäßen Felge nach Fig. 2;
- Fig. 4: eine Hälfte einer weiteren erfindungsgemäßen Felge im Schnitt;
- Fig. 5: eine schematische Darstellung der Faserlagen zur Herstellung der erfindungsgemäßen Felge nach Fig. 4;
- Fig. 6: eine Hälfte einer weiteren erfindungsgemäßen Felge im Schnitt;
- Fig. 7: eine schematische Darstellung der Faserlagen zur Herstellung der erfindungsgemäßen Felge nach Fig. 6;
- Fig. 8: noch eine Hälfte einer weiteren erfindungsgemäßen Felge im Schnitt;
- Fig. 9: eine schematische Darstellung der Faserlagen zur Herstellung der erfindungsgemäßen Felge nach Fig. 8; und
- Fig. 10: eine schematische Darstellung einer Herstellform .

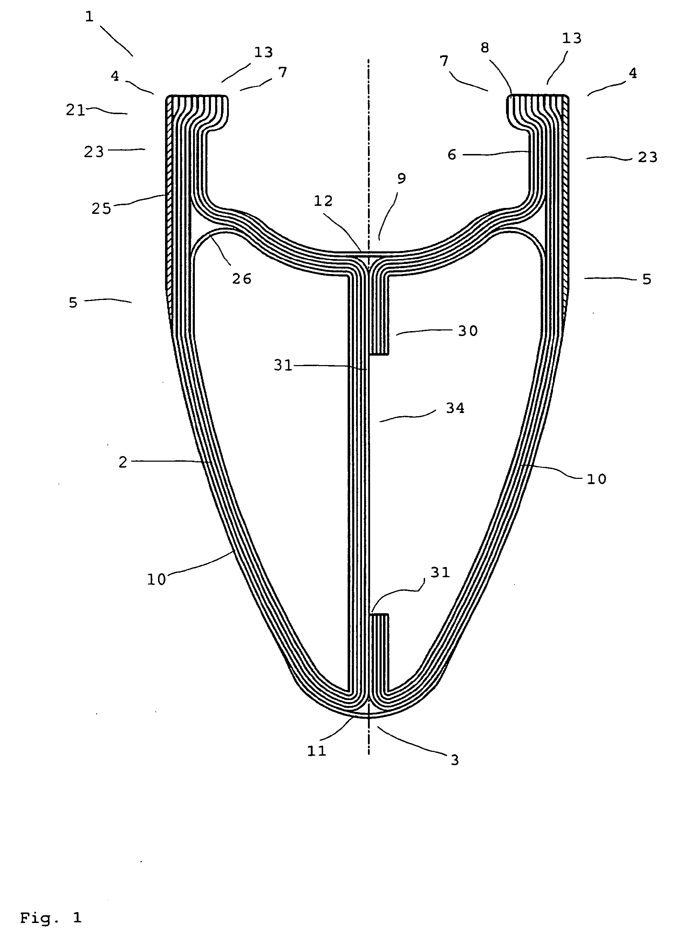

In Figur 1 ist ein erstes Ausführungsbeispiel einer erfindungsgemäßen Felge 1 im Querschnitt dargestellt. Die insgesamt aus einem Faserverbundmaterial hergestellte Felge 1 besteht im Wesentlichen aus zwei Hälften bzw. Felgenteilen 10, die hier im Ausführungsbeispiel symmetrisch und identisch ausgebildet sind.

Jedes Felgenteil 10 umfasst eine Felgenflanke 5 mit dem daran vorgesehenen Felgenhorn 4, einen Teil des Felgenbettes 9 und im radial inneren Bereich der Felgenflanke 5 einen Teil des Felgenbodens 3.

Jedes Felgenteil 10 wird separat hergestellt, wobei hier im Ausführungsbeispiel identische Werkzeuge zur Herstellung verwendet werden. Jedes Felgenteil 10 wird als wenigstens im Wesentlichen geschlossener Ringkörper ausgebildet und zur Fertigstellung der Felge werden die beiden Felgenteile 10 aufeinander geklebt, wobei sich ein Steg 30 aus den aneinander anliegenden Wandungen 31 bildet.

Um das Gewicht der gesamten Felge zu verringern, können in die Wandungen 31 vor dem Zusammenfügen der beiden Felgenteile 10 Öffnungen oder Aussparungen 34 in Form von Ausfräsungen oder dergleichen eingebracht werden, die insbesondere symmetrisch über den Umfang verteilt angeordnet sind und somit die Wandstärke des Steges 30 partiell verringern. Möglich ist es auch, dass die zur Herstellung verwendeten Lagen schon entsprechende Aussparungen 34 aufweisen.

Die Felge 1 besteht insgesamt aus mehreren Faserlagen 6, die in ein Matrixmaterial eingebettet sind. Vorzugsweise werden zur Herstellung der Felge 1 Pregpregs verwendet, also mit einem Harz getränkte Fasermatten. Möglich ist aber auch der Einsatz von ungetränkten Fasermatten, die in der Form drapiert und anschließend mit einem Harz bestrichen oder sonst wie mit einem Harz versorgt werden.

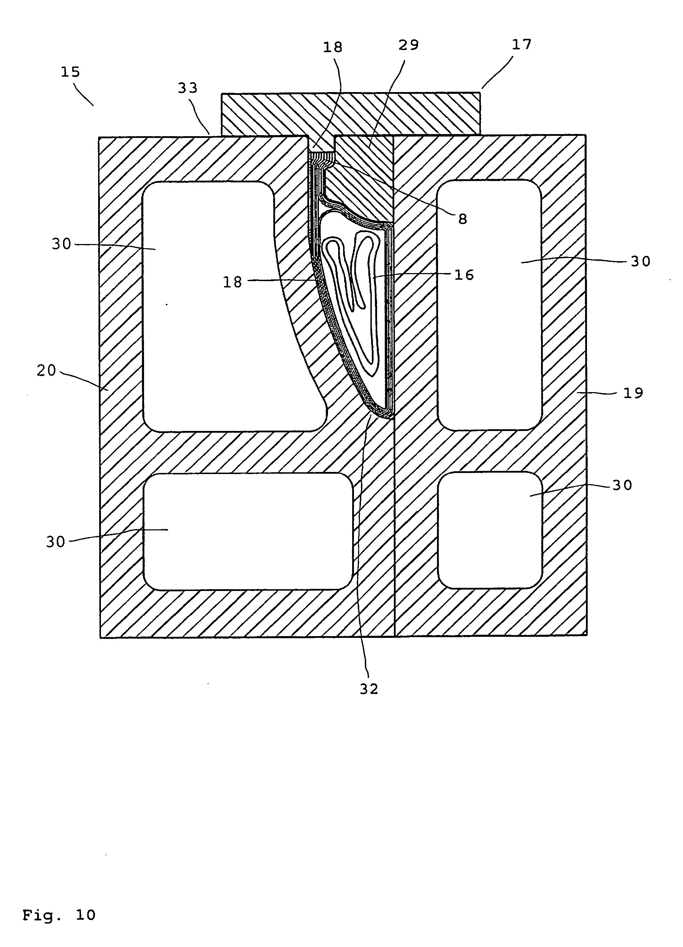

Die prinzipielle Herstellung einer erfindungsgemäßen Felge 1 wird mit einem Werkzeug in Form einer Grundform 15 durchgeführt, die aus zwei Hälften 19 und 20 besteht und die insbesondere aus Metall gefertigt ist. Eine solche Grundform 15 ist in Fig. 10 dargestellt.

In den beiden Hälften der Grundform 15 sind Aufheiz- und Kühlkanäle 30 vorgesehen, um die Grundform 15 durch Durchströmung eines Fluides und insbesondere durch Durchströmung von Wasser schnell auf die gewünschte Aushärtungstemperatur zu bringen bzw. um die Grundform 15 nach der Aushärtung schnell abzukühlen. Durch diese Verfahrensweise ist eine Aufheizung bzw. eine Abkühlung der Grundform in wenigen Minuten möglich, während eine Aufheizung und Abkühlung durch Konvektion an der Raumluft erheblich länger dauert und sogar Stunden dauern kann. Dadurch wird eine erhebliche Beschleunigung des Herstellprozesses ermöglicht, sodass mit der gleichen Grundform 15 pro Tag erheblich mehr Felgenteile 10 und somit Felgen 1 herstellbar sind.

Zur Herstellung eines Felgenteils 10 werden die beiden Hälften 19 und 20 der Grundform 15 miteinander verschraubt. Die formgebende Oberfläche wird insbesondere mit einer Antihaftschicht versehen, um ein Anhaften der Faserlagen 6 des Felgenteils 10 zu verhindern.

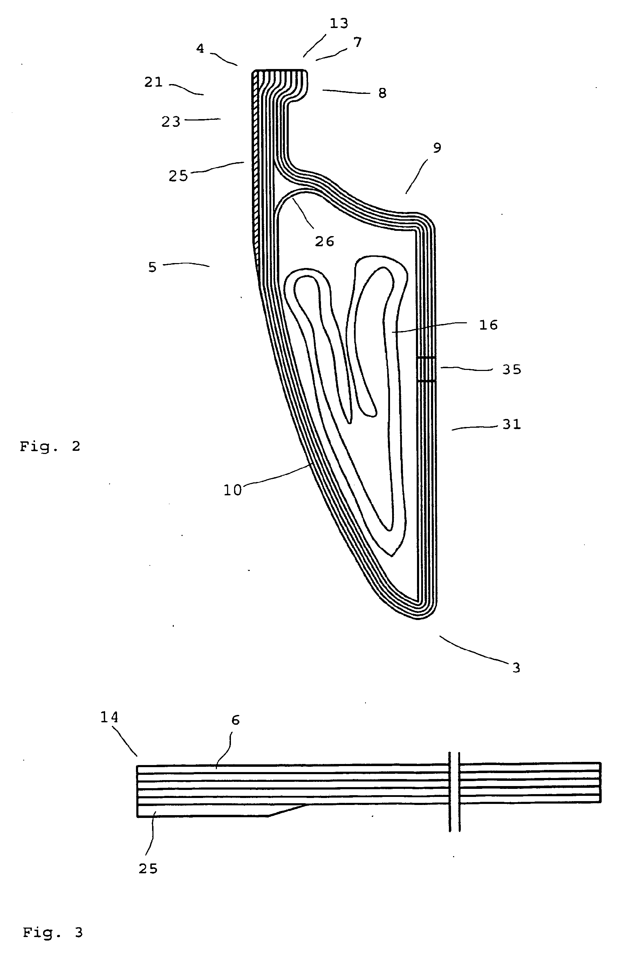

Parallel dazu wird ein Laminatband 14 gebildet (vgl. z.B. die Fig. 3), wozu die einzelnen mit dem Matrixmaterial getränkten Faserlagen 6 auf einer ebenen Fläche auf Maß geschnitten und definiert aufeinander positioniert werden. Dazu wird eine vorbestimmte Anzahl von Faserlagen in Streifenform aufeinandergelegt, um das Laminatband 14 zu bilden. Dazu ist es möglich, Faserlagen 6, 25 unterschiedlicher Breite und/oder Länge zu verwenden. Durch geeignete Markierungen auf der Unterlage wird sichergestellt, dass jedes Felgenteil 10 reproduzierbar und identisch angefertigt wird.

Das Laminatband 14 wird insbesondere V-förmig umgeformt und auf die formgebende Oberfläche 32 der Grundform 15 aufgelegt und passend drapiert. Dabei werden die seitlichen Enden 13 bzw. Kanten des Laminatbandes 14 so ausgerichtet, dass sie parallel im oberen Bereich bzw. im radial äußeren Bereich der Grundform angeordnet sind.

Nach dem Einführen des Laminiatbandes 14. das z.B. aus den Faserlagen 6 besteht, wird ein aufblasbarer Schlauch 16 in die Grundform 15 auf die eingefügten Faserlagen eingelegt, sodass der aufblasbare Schlauch 16 sich ringförmig in der Grundform 15 erstreckt. Ein nicht dargestelltes Schlauchventil wird durch eine in Fig. 1 nicht dargestellte Öffnung in der Grundform 15 nach außen geführt, um den aufblasbaren Schlauch nach dem Verschließen der Grundform 15 aufzublasen und unter Druck zu setzen. In Fig. 2 ist eine solche Öffnung35 angedeutet.

Nach dem Einführen des aufblasbaren Schlauches 16 wird das ringförmige Formteil 29 auf die äußeren Faserlagen 6 aufgelegt. Zu diesem Zeitpunkt sind die Enden 13 der Faserlagen 6, die das Felgenhorn 4 bilden werden noch etwa bündig mit der Oberfläche 33 der Grundform 15 ausgerichtet oder können sogar darüber hinausragen.

Das Formteil 29 kann als massiver Ring ausgeführt sein, der beispielsweise auch in die Hälfte 20 der Grundform 15 eingelegt wird, nachdem die Faserlagen 6 eingelegt wurden und bevor die zweite Hälfte 19 die Grundform 15 verschließt.

Bevorzugt ist es aber, dass das Formteil 29 als mehrteiliger oder geschlitzter Ring ausgeführt ist, der in die Grundform 15 eingeführt wird, nachdem die Hälften 19 und 20 verschraubt und die Faserlagen 6 eingelegt wurden.

Im Anschluss an das Einlegen des Formteils 29 können eventuell nach außen über die Oberfläche 33 überstehende Faserteile abgeschnitten werden, sodass die äußeren Faserlagen bündig mit der Oberfläche 33 abschließen.

Danach wird der Außenring 17 auf die Grundform aufgebracht, der über einen radial nach innen ragenden Steg 18 verfügt. Mit diesem Steg 18 werden die radial außen liegenden Faserlagen 6 verpresst und gestaucht, wodurch sich erst die nach innen ragenden Ausbauchungen 7 ergeben. Bei der Verpressung der einzelnen Faserlagen können sich die Enden der einzelnen Faserlagen untereinander verhaken und bilden einen festen Verbund, der eine hohe Stabilität aufweist.

Der durch den Steg 18 des Außenrings 17 aufgebrachte Druck formt die äußeren Enden 13 der Faserlagen 6 so, dass keine weitere formgebende Nachbearbeitung der Felgenhörner erforderlich ist. Abstehende Grate werden nach der Entnahme des Felgenteils 10 aus der Grundform 15 entfernt. Eine spanende Bearbeitung ist nicht nötig.

Vor dem Verschließen der Grundform 15 mit dem Außenring 17 oder danach wird der aufblasbare Schlauch 16 aufgeblasen und unter den vorbestimmten Druck gesetzt, damit sich das Felgenprofil wie gewünscht an die formgebende Oberfläche 32 der Grundform 15 anlegt.

Nach dem Aufheizen und Aushärten des Felgenteils 10 wird die Grundform 15 mit einer Kühlflüssigkeit in den Kanälen 30 beaufschlagt, sodass die Grundform 15 schnell abkühlt. Nach der Entnahme des Felgenteils 10 kann mit der Grundform das nächste Felgenteil 10 hergestellt werden.

Zur Fertigstellung der Felge 1 werden die zwei Felgenteile 10 zu einem Felgenkörper 2 miteinander verbunden, wozu eine Klebeschicht auf die axialen Wandungen 31 jeweils aufgebracht werden kann, die so zu einem Steg 30 miteinander verbunden werden. Radial innen am Felgenbett 3 kann eine Faserlage in Form eines Streifens 11 aufgebracht werden, um die Felgenteile 10 dort miteinander zu verbinden. Der Streifen 11 kann sich über die Breite des Felgenbodens 3 erstrecken, kann aber auch weiter die Felgenflanken 5 hinauf reichen.

Im Bereich des Felgenbettes 9 wird vorzugsweise ebenfalls ein Streifen 12 aus einer mit einem Matrixmaterial versehenen Faserlage aufgebracht, um so die beiden Felgenteile 10 zuverlässig zu einer Felge 1 zu verbinden.

Insgesamt entsteht eine Felge 1, bei der an den Felgenhörnern 4 gestauchte Faserlagen 8 vorgesehen sind, welche die nach innen ragenden Ausbauchungen 7 herstellen.

Im Bereich der Felgenflanken 5 kann bis zu den Felgenhörnern 5 hinauf eine Bremsfläche 23 vorgesehen sein, die mit einer separaten Bremslage 25 versehen sein kann, die beispielsweise Keramikteilchen umfasst, um die Bremswirkung zu verstärken. Es ist ebenfalls möglich, eine Verschleißindikatorlage an der Bremsfläche 23 vorzusehen, sodass der Benutzer über einen drohenden Verschleiß informiert wird. Die Verschleißindikatorschicht oder die spezielle Bremslage 25 wird insbesondere in einem oberen Bereich 21 vorgesehen.

In den Fig. 2 und 3 ist eine modifizierte Version eines Felgenteils 10 zur Herstellung einer erfindungsgemäßen Felge 1 dargestellt. Dabei zeigt Fig. 2 einen Querschnitt des Felgenteils 10, wobei das Felgenteil 10 ein Felgenhorn 4 mit einer Ausbauchung 7 aus gestauchten Faserlagen 8 aufweist. Des Weiteren ist an dem Felgenteil 10 eine Felgenflanke 5 und ein Teil des Felgenbodens 3 ausgebildet.

Im Inneren des Felgenteils 10 ist ein aufblasbarer Schlauch 16 angeordnet, der nach der Herstellung des Felgenteils 10 durch eine Öffnung 35 beispielsweise in der Wandung 31 wieder entfernt werden kann.

Wie auch schon im Ausführungsbeispiel nach Fig. 1 weist das Felgenteil 10 in Fig. 2 eine Ringlage 26 auf, die sich rings um den aufblasbaren Schlauch 16 herum erstreckt. Dazu wird eine Faserlage 6 oberhalb des aufblasbaren Schlauches 16 umgefaltet. Es ist auch möglich, ein Schlauchgewebe 26 einzuführen.

In Fig. 3 ist das Laminatband 14 in der Queransicht gezeigt, wobei die einzelnen Lagen 6 des Laminatbandes 14 aufeinanderliegen. Hier ist erkennbar, dass die Bremslage 25 sich nicht über die gesamte Breite der einzelnen Faserlagen erstreckt, sondern nur in einem Bereich 21, der sich über das Felgenhorn und einen Teil der Felgenflanke 5 erstreckt. Die Anzahl der aufeinandergelegten Faserlagen 6 zur Bildung des Laminatbandes hängt vom Einzelfall ab. So ist es möglich, weniger oder mehr als die in Fig. 3 dargestellten fünf Faserlagen 6 zur Herstellung des Felgenteils 10 zu verwenden.

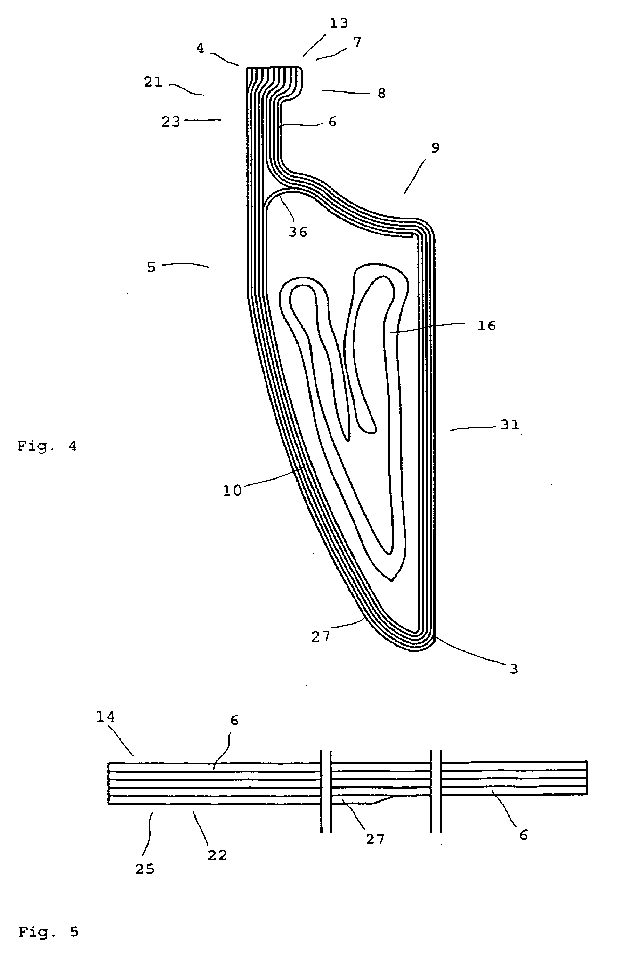

Zur Herstellung des in Fig. 4 dargestellten Felgenteils 10 wird ein Laminatband 14 verwendet, wie es in Fig. 5 schematisch abgebildet ist. Im Unterschied zu dem Ausführungsbeispiel nach Fig. 2 wird für das Felgenteil 10 nach Fig. 4 keine Ringlage 26 eingesetzt. Außerdem wird die Felgenflanke 5 durch eine Verstärkungslage 27 verstärkt, die sich vom Bereich des Felgenhorns 4 aus bis zum Felgenboden 3 erstreckt und so die Felgenflanke 5 und das Felgenhorn 4 verstärkt, während der Steg 31 und das Felgenbett 9 nicht unnötig verstärkt werden. Auf eine separate Bremslage 25 wurde hier verzichtet.

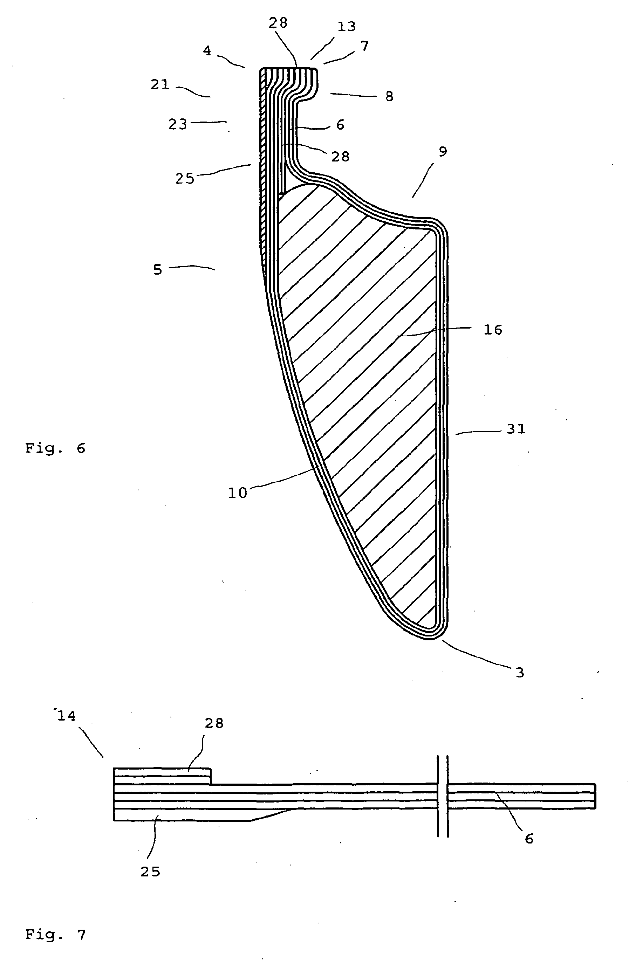

Für das in Fig. 6 abgebildete Felgenteil 10 wird ein Laminatband 14 eingesetzt wie es in Fig. 7 dargestellt ist. Dabei wird davon ausgegangen, dass im Bereich des Felgenhorns relativ viel Material erforderlich ist, weshalb im Bereich des Felgenhorns 4 hier zwei zusätzliche Felgenhornlagen 28 vorgesehen sind, die als schmale Streifen auf die Faserlagen 6 aufgelegt werden.

Zusätzlich kann eine Bremslage 25 vorgesehen sein. Eine solche Ausbildung des Laminatbandes 14 führt dazu, dass im Bereich des Felgenhorns 4 relativ viel Material zur Bildung der gestauchten Faserlagen 8 zur Verfügung steht. Möglich ist auch der Einsatz nur einer zusätzlichen Felgenhornlage 28 oder mehrerer Felgenhornlagen 28. Hier wird ein Kern 16 verwendet, der z.B. aus einem geformten Hartschaum bestehen kann und der anstelle eines aufblasbaren Schlauchs 16 in die Form eingelegt wird und für die gewünschte Formgebung sorgt. Nach der Herstellung kann der Kern 16 in der Felge verbleiben oder z.B. mit einem Lösungsmittel ausgewaschen werden.

Möglich und bevorzugt ist auch ein Kern 16 aus einem eutektischen Metall, welches nach dem Aufheizen auf die Schmelztemperatur aus dem Felgenteil 10 ausgespült und wiederverwendet wird.

Es ist auch möglich einen mit einem Fluid gefüllten Schlauch zu verwenden, der z.B. über ein Druckausgleichsventil mit der Umgebung verbunden ist, um bei dem Temperaturanstieg beim Aufheizen den Druck auszugleichen.

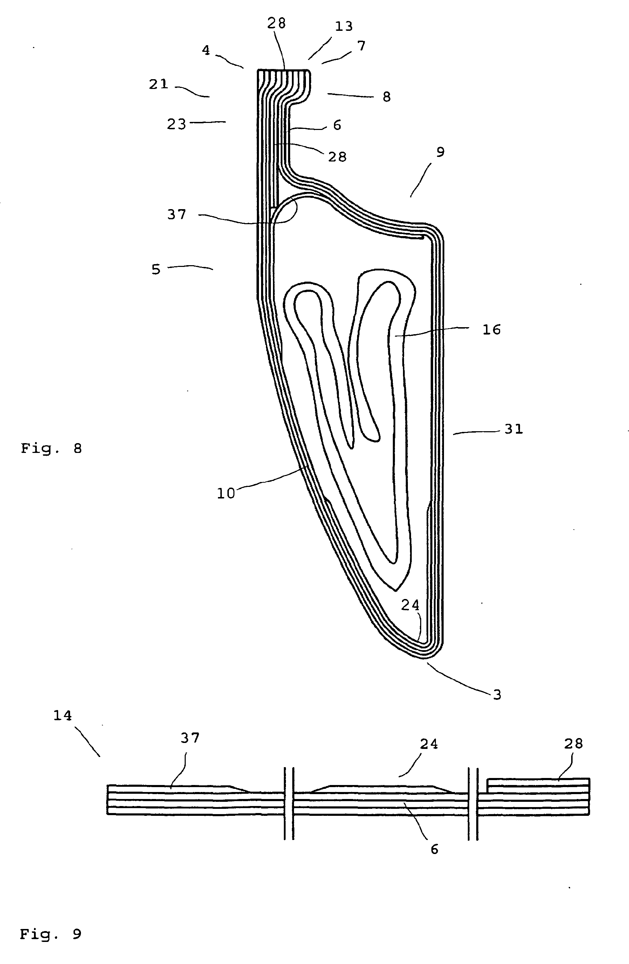

In Fig. 9 ist ein weiteres Ausführungsbeispiel eines Felgenteils 10 zur Herstellung einer erfindungsgemäßen Felge 1 abgebildet. Dazu wird ein Laminatband 14 verwendet wie es in Fig. 8 abgebildet ist.

Zur Bildung des Laminatbandes 14 werden auf die Faserlagen 6 am Ende 13 zwei Felgenhornlagen 28 von schmaler Breite aufgelegt, während in einem zentralen Bereich eine Felgenbodenverstärkungslage bzw. Speichenlochverstärkungslage 24 aufgebracht wird. Dadurch wird erzielt, das einerseits der Bereich des Felgenhorns 4 über genügend Material verfügt, um eine ausreichende Stabilität zu erzeugen, während andererseits auch der Felgenboden 3 entsprechend verstärkt wird, der die Belastung der Speichen aufnehmen muss. Während die Felgenhornlagen 28 auf die in der Darstellung nach Fig. 9 rechte Kante des Laminatbandes 14 und die Felgenbodenverstärkungslage bzw. Speichenlochverstärkungslage 24 auf einen mittleren Bereich aufgelegt werden, werden auf die in der Darstellung nach Fig. 9 linke Kante des Laminatbandes 14 schmalere Lagen 37 aufgelegt, die nach dem Einlegen in die Form und nach dem Einlegen eines festen Kerns oder aufblasbaren Schlauchs 16 umgeklappt werden, um das Felgenbett zu verstärken und um die auftretenden Kräfte abzuleiten.

Insgesamt stellt die Erfindung ein Verfahren zur Herstellung einer Felge und eine Felge zur Verfügung, die über die gestauchten Felgenlagen 8 im Bereich des Felgenhorns 4 Ausbauchungen 7 bildet, die sich zur Aufnahme von Wulstreifen eignen. Überraschenderweise wird eine ausreichende Stabilität auch ohne zusätzliche Verstärkungsringe im Bereich des Felgenhorns erzielt.

Durch die zweigeteilten Felgen, die aus zwei Hälften bzw. Felgenteilen 10 hergestellt sind, wird eine einfache und effektive Produktion ermöglicht, wobei durch die Stauchung der Felgenlagen 6 im Bereich des Felgenhorns 4 auf eine aufwändige Nachbearbeitung der Felgenhörner verzichtet werden kann. Insgesamt ist eine hochqualitative Felge mit einem relativ geringen Aufwand herstellbar.

### Bezugzeichen:

- 1: Felge
- 2: Felgenkörper
- 3: Felgenboden
- 4: Felgenhörner
- 5: Felgenflanken
- 6: Faserlage
- 7: Ausbauchung
- 8: Gestauchte Faserlage
- 9: Felgenbett
- 10: Felgenteil
- 11: Streifen
- 12: Streifen
- 13: Ende
- 14: Laminatband
- 15: Grundform
- 16: Kern
- 17: Außenring
- 18: Steg
- 19: Hälften
- 20: Hälften
- 21: Bereich
- 22: Keramikschicht
- 23: Bremsfläche
- 24: Speichenlochverstärkungslage
- 25: Bremslage
- 26: Ringlänge
- 27: Flankenverstärkungslage
- 28: Felgenhornlage
- 29: Formteil
- 30: Steg
- 31: Wandung
- 32: Formgebende Oberfläche
- 33: Oberfläche
- 34: Ausschnitt
- 35: Ventilloch
- 36: Umgelegte Lage
- 37: Lage

## Patentansprüche

1. Felge (1) insbesondere für Fahrräder und dergleichen, wenigstens umfassend einen Felgenkörper (2) mit einem Felgenboden (3) und seitliche mit Felgenhörnern (4) versehene Felgenflanken (5), wobei wenigstens die Felgenhörner (4) wenigstens teilweise aus einem Faserverbundmaterial mit wenigstens einer Faserlage (6) bestehen,
**dadurch gekennzeichnet,**
**dass** die Felgenhörner (4) nach innen überstehende Ausbauchungen (7) aus gestauchten Faserlagen (8) aufweisen, zwischen denen ein Reifen an dem Felgenkörper (2) aufnehmbar ist.

2. Felge(1) nach Anspruch 1, wobei der Felgenkörper (2) ein Felgenbett (9) aufweist, welches über die Felgenflanken (5) mit dem Felgenboden (3) verbunden ist.

3. Felge (1) nach Anspruch 1 oder 2, wobei der Felgenkörper (2) aus wenigstens zwei miteinander verbundenen Felgenteilen(10) besteht.

4. Felge (1) nach dem vorhergehenden Anspruch, wobei die beiden Felgenteile (10) im Wesentlichen symmetrisch zueinander ausgebildet sind.

5. Felge (1) nach einem der beiden vorhergehenden Ansprüche, wobei die beiden Felgenteile (10) jeweils eine Felgenflanke (5) mit einem Felgenhorn (4), sowie einen Teil des Felgenbodens (3) bilden.

6. Felge (1) nach einem der beiden vorhergehenden Ansprüche, wobei die beiden Felgenteile (10) über wenigstens einen Streifen (11, 12) aus Faserverbundmaterial miteinander verbunden sind.

7. Felge (1) nach einem der vorhergehenden Ansprüche, wobei die Faserlagen (6) wenigstens teilweise aus einem Fasergewebe besteht.

8. Felge (1) nach einem der vorhergehenden Ansprüche, wobei die Enden (13) wenigstens einiger Faserlagen (6) im Bereich der Felgenhörner (4) vorgesehen sind.

9. Felge (1) nach einem der vorhergehenden Ansprüche, wobei der Felgenkörper (2) und insbesondere wenigstens ein Felgenhorn (4) wenigstens teilweise aus wenigstens einem Gewebeschlauch bestehen.

10. Verfahren zur Herstellung einer Felge (1), insbesondere für Fahrräder,
welche wenigstens einen Felgenkörper (2) mit einem Felgenboden (3) und seitliche mit Felgenhörnern (4) versehene Felgenflanken (5) aufweist, wobei wenigstens die Felgenhörner (4) wenigstens teilweise aus einem Faserverbundmaterial aus wenigstens einer Faserlage (6) bestehen,
**dadurch gekennzeichnet,**
**dass** an den Felgenhörnern (2) die Faserlagen (6) gestaucht werden, um nach innen überstehende Ausbauchungen (7) zu bilden, zwischen denen ein Reifen an dem Felgenkörper (2) aufnehmbar ist.

11. Verfahren zur Herstellung einer Felge (1) nach dem vorhergehenden Anspruch, wobei der Felgenkörper (2) ein Felgenbett (9) umfasst, welches über die Felgenflanken (5) mit dem Felgenboden (3) verbunden ist, **dadurch gekennzeichnet, dass** es die folgenden Schritte umfasst:
Einbringen eines Laminatbandes (14) in eine Grundform (15), welches wenigstens einen Streifen (11, 12) aus wenigstens einer Faserlage (6) umfasst, um wenigstens einen Teil des Felgenbodens (3) und eine Felgenflanke (5) und ein Felgenhorn (4) zu bilden,
Auflegen eines Kerns (16) auf das Laminatband(14) in der Grundform (15),
Aufbringen eines Außenringes (17), um die Grundform (15) zu schließen und um das Material in der Region der oberen Felgenflanken (5) und der Felgenhörner (4) zu stauchen und zu verpressen,
Aufheizen der Grundform (15) und Temperieren für eine vorbestimmte Zeitdauer bei vorbestimmten Temperaturbedingungen,
Entnahme der Felge (1).

12. Verfahren nach einem der vorhergehenden Ansprüche 10 bis 11, wobei wenigstens ein radial innenliegender Steg (18) des Außenringes (17) die Faserlagen (6) in der Grundform (15) im Bereich der Felgenhörner (4) staucht und umformt.

13. Verfahren nach einem der vorhergehenden Ansprüche 10 bis 12, wobei vor dem Aufbringen des Außenringes (17) das radial überstehende Material entfernt wird.

14. Verfahren nach einem der vorhergehenden Ansprüche 10 bis 13, wobei die Grundform (15) aus zwei Hälften (19, 20) besteht, welche vor dem Einbringen des Laminatbandes (14) miteinander verbunden werden.

15. Verfahren nach einem der vorhergehenden Ansprüche 10 bis 14, wobei zunächst zwei insbesondere symmetrische Felgenteile (10) hergestellt werden, die miteinander verbunden werden, um den Felgenkörper (2) zu bilden, wobei die beiden Felgenteile(10) insbesondere durch Aufbringen wenigstens eines Streifens (11, 12) auf den Felgeboden (3) und/oder das Felgenbett (9) miteinander verbunden werden.

## Claims

1. A rim (1) in particular for bicycles and the like, comprising at least a rim body (2) with a rim base (3) and lateral rim flanks (5) provided with rim flanges (4) wherein at least the rim flanges (4) consist at least in part of a fibrous composite material having at least one fiber layer (6),
**characterized in**
**that** the rim flanges (4) comprise inwardly overhanging bulges (7) of squashed fiber layers (8) between which a tire can be accommodated at the rim body (2).

2. The rim (1) according to claim 1 wherein the rim body (2) comprises a rim well (9) which is joined with the rim base (3) through the rim flanks (5).

3. The rim (1) according to claim 1 or 2 wherein the rim body (2) consists of at least two rim parts (10) joined to one another.

4. The rim (1) according to the preceding claim wherein the two rim parts (10) are formed substantially symmetrically relative to one another.

5. The rim (1) according to any of the two preceding claims wherein each of the two rim parts (10) form a rim flank (5) with a rim flange (4) and part of the rim base (3).

6. The rim (1) according to any of the two preceding claims wherein the two rim parts (10) are joined to one another by means of at least one strip (11, 12) of a fibrous composite material.

7. The rim (1) according to any of the preceding claims wherein the fiber layers (6) consist of a fiber fabric at least in part.

8. The rim (1) according to any of the preceding claims wherein the ends (13) of at least some of the fiber layers (6) are provided in the region of the rim flanges (4).

9. The rim (1) according to any of the preceding claims wherein the rim body (2) and in particular at least one rim flange (4) consist of at least one fabric hose at least in part.

10. A method for producing a rim (1) in particular for bicycles,
comprising at least a rim body (2) with a rim base (3) and lateral rim flanks (5) provided with rim flanges (4) wherein at least the rim flanges (4) consist at least in part of a fibrous composite material of at least one fiber layer (6),
**characterized in**
**that** the fiber layers (6) are squashed at the rim flanges (2) to form bulges (7) overhanging inwardly between which a tire can be accommodated at the rim body (2).

11. The method for producing a rim (1) according to the preceding claim wherein the rim body (2) comprises a rim well (9) which is joined with the rim base (3) through the rim flanks (5), **characterized in that** it comprises the following steps:
inserting in a master mold (15) a laminated band (14) comprising at least one strip (11, 12) of at least one fiber layer (6) to form at least part of the rim base (3) and a rim flank (5) and a rim flange (4),
positioning a core (16) on the laminated band (14) in the master mold (15),
positioning an outer ring (17) to close the master mold (15) and to squash and pressure-bond the material in the region of the upper rim flanks (5) and the rim flanges (4),
heating up the master mold (15) and temperature-controlling for a predetermined duration at predetermined temperature conditions,
removing the rim (1).

12. The method of any of the preceding claims 10 to 11 wherein at least one radially inwardly web (18) of the outer ring (17) squashes and re-shapes the fiber layers (6) in the master mold (15) in the region of the rim flanges (4).

13. The method according to any of the preceding claims 10 to 12 wherein before applying the outer ring (17) any radially overhanging material is removed.

14. The method according to any of the preceding claims 10 to 13 wherein the master mold (15) consists of two halves (19, 20) which are joined to one another before the laminated band (14) is inserted.

15. The method according to any of the preceding claims 10 to 14 wherein first, two in particular symmetrical rim parts (10) are produced which are joined to one another to form the rim body (2) wherein the two rim parts (10) are joined to one another in particular by means of applying at least one strip (11, 12) on the rim base (3) and/or the rim well (9).

## Revendications

1. Jante (1) en particulier pour roue de bicyclette et équivalent, comprenant au moins un corps de jante (2) assemblé à un fond de jante (3) et des parois latérales (5) pourvues de rebords de jante (4), alors qu'au moins les rebords (4) sont composés au moins en partie d'un matériau composite fibreux constitué d'au moins une couche fibreuse (6),
**caractérisée en ce que**,
les rebords de jante (4) présentent des renflements (7) tournés vers l'intérieur et en couches de fibres refoulées (8), entre lesquels un pneu peut être monté au corps de la jante (2).

2. Jante (1) selon la revendication 1, le corps de la jante (2) présentant un lit de jante (9) relié au fond de jante (3) par les parois de la jante (5).

3. Jante (1) selon la revendication 1 ou 2, le corps de la jante (2) se composant d'au moins deux parties de jante (10) reliées l'une à l'autre.

4. Jante (1) selon la revendication précédente, les deux parties de jante (10) étant, pour l'essentiel, symétriques.

5. Jante (1) selon l'une quelconque des deux revendications précédentes, les deux parties de jante (10) constituant chacune une paroi de jante (5) avec un rebord de jante (4) ainsi qu'une partie du fond de jante (3).

6. Jante (1) selon l'une quelconque des revendications précédentes, les deux parties de jante (10) étant reliées l'une à l'autre au moins par une bande (11, 12) en matériau composite fibreux.

7. Jante (1) selon l'une quelconque des revendications précédentes, les couches fibreuses (6) étant composées au moins partiellement d'un tissu en fibres.

8. Jante (1) selon l'une quelconque des revendications précédentes, les extrémités (13) d'au moins quelques unes des couches fibreuses (6) devant s'étirer jusqu'au niveau des rebords de jante (4).

9. Jante (1) selon l'une quelconque des revendications précédentes, le corps de jante (2) et en particulier au moins un rebord de jante (4) étant constitué au moins partiellement d'au moins une chambre à air en textile.

10. Procédé de fabrication d'une jante (1), en particulier pour roue de bicyclette,
laquelle jante (1) présente au moins un corps de jante (2) avec un fond de jante (3) et des parois latérales (5) pourvues de rebords (4), les rebords de jante au moins (4) se composant au moins partiellement d'un matériau composite fibreux à partir d'au moins une couche fibreuse (6),
**caractérisé en ce que**,
les couches fibreuses (6) sont refoulées au niveau des rebords de jante (2) pour former des renflements tournés vers l'intérieur (7), entre lesquels un pneu peut être fixé au corps de jante (2).

11. Procédé de fabrication d'une jante (1) selon la revendication précédente, le corps de la jante (2) comprenant un lit de jante (9) relié au fond de jante (3) par les parois de la jante (5), **caractérisé en ce qu'**il comporte les étapes suivantes :
Mise en oeuvre d'un bandeau de stratifié (14) dans un moule (15), ce stratifié (14) étant composé d'au moins une bande (11, 12) à base d'au moins une couche fibreuse (6), dans le but de former au moins une partie du fond de jante (3) et une paroi latérale de jante (5) ainsi qu'un rebord de jante (4),
Pose d'un noyau (16) sur le bandeau de stratifié (14) dans le moule (15),
Montage d'une bague extérieure (17) pour fermer le moule (15) et pour refouler et compresser le matériau dans la région des parois latérales supérieures (5) et des rebords de jante (4),
Chauffage du moule (15) et thermorégulation pour une durée prédéfinie dans des conditions thermiques prédéfinies,
Extraction de la jante (1).

12. Procédé selon l'une quelconque des revendications précédentes de 10 à 11, avec au moins une âme radiale intérieure (18) de la bague extérieure (17) refoulant et compressant les couches fibreuses (6) dans le moule (15) au niveau des rebords de jante (4).

13. Procédé selon l'une quelconque des revendications précédentes 10 à 12, le matériau radial dépassant étant enlevé avant que la bague extérieure (17) ne soit montée.

14. Procédé selon l'une quelconque des revendications précédentes 10 à 13, le moule (15) se composant de deux moitiés (19, 20), qui seront reliées l'une à l'autre avant la mise en oeuvre du stratifié (14).

15. Procédé selon l'une quelconque des revendications 10 à 14, deux parties de jante (10) particulièrement symétriques étant d'abord fabriquées, puis reliées l'une à l'autre pour former le corps de la jante (2), les deux parties de jante (10) étant reliées l'une à l'autre en particulier par la pose d'au moins une bande (11, 12) sur le fond (3) et/ou sur le lit (9) de la jante.
